# EUROPEAN PATENT APPLICATION

(11) **EP 4 202 520 A1**
(43) Date of publication of application: **28.06.2023**
(21) Application number: 22212569.2
(22) Date of filing: 09.12.2022
(51) Int. Cl.: G02B 6/44

(54) **OPTICAL FIBER CABLE WITH COIL ELEMENTS**

(30) Priority: 21.12.2021 IN 202111059613
(71) Applicant: Sterlite Technologies Limited, Haryana 122002 (IN)
(72) Inventor: Shukla, Vikash, 122002 Gurugram (IN)
(74) Representative: Petraz, Gilberto Luigi

(57) **Abstract**

The present disclosure relates to an optical fiber cable (200, 300, 400) comprising one or more optical transmission elements (202, 302, 402) extending in a longitudinal direction surrounded by one or more coil elements (100) in a series of loops such that each loop (106) is physically connected to adjacent loops. In particular, one or more coil elements are flexible in a transverse direction and are substantially non-elongate in the longitudinal direction. Moreover, the coil elements are fiber retaining elements (102) further comprises a pitch retaining element (104) connecting the subsequent loops of the fiber retaining element to preserve the relative position of the subsequent loops (106).

## Description

### TECHNICAL FIELD

Embodiments of the present disclosure relate to elate to the field of telecommunications cables and more particularly relates to an optical fiber cable with coil elements.

This application claims the benefit of Indian Application No 202111059613 titled "OPTICAL FIBER CABLE WITH COIL ELEMENTS" filed by the applicant on 21/12/2021, which is incorporated herein by reference in its entirety.

### BACKGROUND ART

Optical fiber cables are a critical component of modern communications network across the globe. An increase in data traffic resulting from the advancement of the Internet is increasing the speed and volume of optical communication networks. Fiber optic communication systems are becoming prevalent in part because service providers want to deliver high bandwidth communication capabilities (e.g., data invoice) to customers. Fiber optic communication systems employ a network of fiber optic cables to transmit large volumes of data invoice signals over relatively long distances.

Optical fiber can be used as a communication medium for telecommunication and networking applications because it is flexible and can be bundled into cables. Optical fiber is especially advantageous for communications because light propagates through the fiber with less attenuation than for electrical signals using metal wires. This facilitates long distance communications using with few repeaters. Further, optical fiber permits transmission at higher bandwidths (e.g., data rates) than other forms of communications.

An optical fiber is conventionally composed of (i) an optical core, having the function of transmitting and optionally amplifying an optical signal, and (ii) an optical cladding, having the function of confining the optical signal in the core. For this purpose, the refractive indexes of the core (nc) and of the cladding (ng) are such that nc>ng.

A fiber optic cable is usually made up of many individual optical fibers. The optical fiber cables are typically made with or comprise loose tubes or buffer tubes. For example, according to one commercially available configuration, twelve (12) 250 micron optical fibers may be grouped together in a buffer tube. A fiber optic cable may contain 6 buffer tubes (i.e., for a total of 72 optical fibers) and one or more strength members (e.g., metallic member), with the buffer tubes and strength member being surrounded by a jacket providing physical and environmental protection.

Conventionally, such tubes are made of PBT (Polybutylene terephthalate), PP (Polypropylene) and other similar materials that restrict easy bending of the optical fiber cables during handling and installation processes. One way to address the aforesaid problem is to change the material of the tubes. However, the material change may not be a suitable option as it may result in additional manufacturing cost and reduced strength of the optical fiber cables. Another way to address the aforesaid problem is to change the design of the tubes.

Chinese patent application no. CN209590359 titled "The nonmetallic indoor optical cable of helix tube type" discloses a spiral tube used as a uni-tube in an optical fiber cable.

Japanese patent application no. JP2011150166A titled "Cable connection portion, power and optical fiber composite cable, and cable connection method" discloses a spiral tube body around a fiber in a cable connecting portion.

US patent application no. US8516856B2 titled "Methods of making fiber waveguides from multilayer structures" discloses methods for making fiber waveguides include rolling a multilayer structure into a spiral structure and forming the fiber waveguide from the spiral structure. In particular, the forming includes drawing a fiber preform derived from the spiral structure.

However, there are a few drawbacks in the currently similar technologies providing tube designs for easy bending of the optical fiber cables during handling and installation processes. The designs proposed by the prior arts are limited to uni-tube optical fiber cables and do not provide a solution to make multi tube optical fiber cables. Moreover, for many optical fiber applications, reducing buffer-tube wall thickness is unsatisfactory because such buffer tubes provide insufficient crush resistance (i.e., hoop strength). Furthermore, optical-fiber buffer tubes and fiber optic cables are susceptible to water intrusion.

Accordingly, to overcome the disadvantages of the prior art, there is an urgent need for a technical solution that overcomes the above-stated limitations in the prior arts. The present disclosure focuses on providing an alternative to the conventional tubes that is not limited to a single type of cable design and also does not aid in increasing manufacturing cost of the optical fiber cables.

### SUMMARY OF THE DISCLOSURE

Embodiments of the present disclosure provide an optical fiber cable comprising one or more optical transmission elements extending in a longitudinal direction and one or more coil elements. Moreover, one or more coil elements are a series of loops such that each loop from the series of loops is physically connected to adjacent loops. Furthermore, the series of loops of one or more coil elements surrounds one or more optical transmission elements. Further, one or more coil elements are flexible in the transverse direction.

According to the first aspect of the present disclosure, one or more coil elements are substantially non-elongatable in the longitudinal direction.

In accordance with an embodiment of the present disclosure, the series of loops has a radial deformation of less than 30% at an axial force of up to 50N.

According to a second aspect of the present disclosure, a distance between consecutive loops of one or more coil elements varies up to d. In particular, d is a gap between two consecutive loops in zero stress position, during bending of one or more coil elements to a circle of diameter equal to or more than 10D. Moreover, D is an outer diameter of one or more coil elements.

According to a third aspect of the present disclosure, one or more coil elements are made of a fiber retaining element such that subsequent loops are made of a single continuous element.

In accordance with an embodiment of the present disclosure, one or more coil elements further comprises a pitch retaining element connecting the subsequent loops of the fiber retaining element to preserve the relative position of the subsequent loops.

In accordance with an embodiment of the present disclosure, one or more coil elements is defined by multiple subsequent loops placed at a predefined distance connected through a pitch retaining element longitudinally.

According to a fourth aspect of the present disclosure, the optical fiber cable further comprises a central strength member, wherein one or more coil elements are stranded around the central strength member.

According to a fifth aspect of the present disclosure, a gap between two consecutive loops of one or more coil elements is less than a width of a loop of one or more coil elements.

In accordance with an embodiment of the present disclosure, the optical fiber cable further comprises at least one of a water swellable yarn and superabsorbent polymer powder in one or more coil elements.

In accordance with an embodiment of the present disclosure, the core is compressed at least radially.

The foregoing solutions of the present disclosure are attained by employing an optical fiber with cable with one or more coil elements in telecommunication networks.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot of a coil element for use in an optical fiber cable in accordance with an embodiment of the present disclosure;
Fig. 2 is a pictorial snapshot of an example uni-tube optical fiber cable with a coil element in accordance with an embodiment of the present disclosure;
Fig. 3 is a pictorial snapshot of an example multi-tube optical fiber cable with a plurality of coil elements in accordance with an embodiment of the present disclosure;
Fig.4 is a pictorial snapshot of an example multi-tube optical fiber cable with the plurality of coil elements in accordance with an embodiment of the present disclosure.

### REFERENCE LIST

One or more coil elements 100
Fibre retaining element - 102
Pitch retaining element - 104
Subsequent loops - 106
Optical fiber cable - 200, 300, 400
One or more optical transmission elements - 202, 302, 402
First layer - 204, 304, 404
Second layer - 208, 308, 408
One or more ripcords - 210, 310, 410
Water-swellable yarn - 212, 312, 412

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Optical fiber refers to a medium associated with transmission of information over long distances in the form of light pulses. The optical fiber uses light to transmit voice and data communications over long distances when encapsulated in a jacket/sheat

ITU.T, stands for International Telecommunication Union-Telecommunication Standardization Sector, is one of the three sectors of the ITU. The ITU is the United Nations specialized agency in the field of telecommunications and is responsible for studying technical, operating and tariff questions and issuing recommendations on them with a view to standardizing telecommunications on a worldwide basis.

Radial deformation may be defined as a change in diameter of the series of loops on applying the axial force and the axial force is a force applied in a longitudinal direction.

Terms uni-tube optical fiber cable and optical fiber cable may be used interchangeably depending upon the context described herein.

Terms multi-tube optical fiber cable and optical fiber cable may be used interchangeably depending upon the context described herein.

Terms multi-tube optical fiber cable and optical fiber cable may be used interchangeably depending upon the context described herein.

Terms one or more optical transmission elements or interchangeably optical fibers may be used interchangeably depending upon the context described herein.

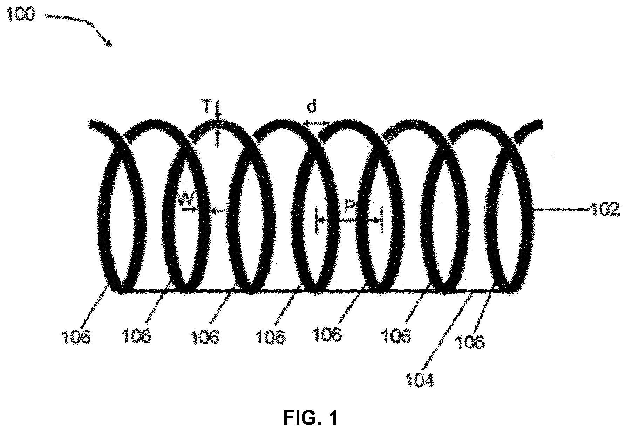

Fig. 1 is a pictorial snapshot of a coil element for use in an optical fiber cable in accordance with an embodiment of the present disclosure. The coil element 100 includes a fibre retaining element 102 such that subsequent loops 106 are made of a single continuous element. In particular, the coil element 100 include a pitch retaining element 104 connecting the subsequent loops 106 of the fiber retaining element 102 to preserve the relative position of the subsequent loops (or loops) 106. Moreover, the coil element 100 is defined as a series of loops such that each loop 106 is physically connected to adjacent loops 106. The coil element 100 is defined as a series of connected loops. Further, the coil element 100 may also be defined as multiple subsequent loops placed at a predefined distance connected through a longitudinal pitch retaining element (i.e., the pitch retaining element 104). The coil element 100 may be substantially non-elongate in a longitudinal direction and flexible in a transverse direction during bending of the optical fiber cable. The coil element 100 may maintain a gap (d) between the series of loops during the handling and installation of the optical fiber cable.

In accordance with an embodiment of the present disclosure, the fiber retaining element 102 may be characterized by the gap (d), a width (W), a thickness (T), a diameter and a pitch (P). Particularly, the gap between two consecutive loops of the fiber retaining element 102 may be less than the width of a loop 106 of the fiber retaining element 102, so that the loops of the fiber retaining element 102 do not intermingle in the loops of another coil element when placed together. Moreover, the distance between the consecutive loops of the fiber retaining element 102 may vary up to the gap (d) between two consecutive loops in zero stress position during bending of the coil element 100 in a circle of diameter equal to or more than 10D, where D is an outer diameter of the coil element 100.

In accordance with an embodiment, the width of the fiber retaining element 102 may be between 1 mm and 15 mm. Alternatively, the width may vary. Similarly, the thickness of the fiber retaining element 102 may be between 0.1 mm and 0.5 mm and the diameter of the fiber retaining element 102 may be between 1.5 mm and 9 mm to house optical transmission elements up to 576.

In accordance with an embodiment, the fibre retaining element 102 may be made of a single material, a blend of more than one material or layers of one or more materials. Further, the pitch may be a distance between centres of two adjacent loops.

In accordance with an embodiment, the series of loops may be equally sized and connected to each other in a spiral or helical fashion. Each of the series of loops of the coil element 100 may be substantially equal in size, shape and aligned with each other such that it projects a circular cross-sectional view like a hollow cylinder. Moreover, the series of loops of the fiber retaining element 102 may have a radial deformation of less than 30% at an axial force of up to 50N. Alternatively, the radial deformation may vary.

In accordance with an embodiment, the pitch retaining element 104 may be made of a thermoplastic material and bond with the series of loops of the fiber retaining element 102 during extrusion. In particular, the pitch retaining element may be extruded in contact with an outer surface of the series of loops or through the series of loops. Moreover, the series of loops and the pitch retaining element 104 may be fabricated in a tandem process. Further, the pitch retaining element 104 is characterized by thickness. The thickness of the pitch retaining element 104 may be between 0.05 mm and 0.5 mm. Alternatively, the thickness of the pitch retaining element 104 may vary.

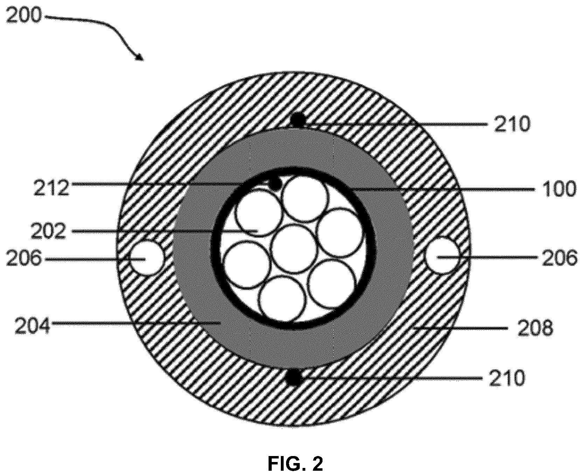

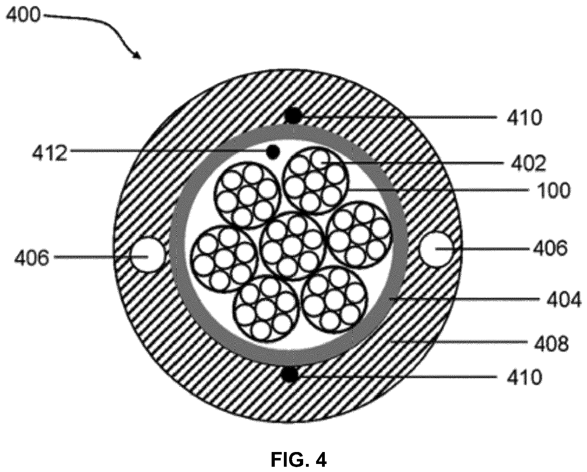

Fig. 2, Fig. 3 and Fig. 4 are pictorial snapshots of an example uni-tube optical fiber cable with a coil element, multi-tube optical fiber cable with a plurality of coil elements and multi-tube optical fiber cable with the plurality of coil elements in accordance with one or more embodiments of the present disclosure.

The optical fiber cable 200, 300, 400 includes one or more optical transmission elements 202, 302, 402, one or more coil elements 100, a first layer 204, 304, 404 and a second layer 208, 308, 408. In particular, one or more optical transmission elements 202, 302, 402 may extend in a longitudinal direction. In particular, one or more optical transmission elements are present in form of, but not limited to, a group of loose optical fibers, a group (or bundle) of optical fiber ribbons or a stack of optical fiber ribbons, a group of bendable ribbons, a group of corrugated ribbons, a group of partially bonded optical fiber ribbons, a group of flat ribbons.

In accordance with an embodiment of the present disclosure, the optical fiber ribbon bundle is a group of a plurality of optical fiber ribbons arranged together. In particular, the optical fiber ribbon includes a number of optical fibers arranged together using a matrix material. Moreover, multiple individual optical fiber ribbons are stacked or grouped into a bundle to form the optical fiber ribbon bundle. Furthermore, a partially bonded optical fiber ribbon from the group of intermittently bonded optical fiber ribbons is formed by intermittently bonding the plurality of optical fibers with the matrix material that imparts a bending and rolling capability along a width of the partially bonded optical fiber ribbon.

In accordance with an embodiment of the present disclosure, the optical fiber may be of ITU.T G.657.A2 category. Alternatively, the optical fiber may be of ITU.T G.657.A1 or G.657.B3 or G.652.D or other suitable category. The optical fiber may be a bend-insensitive fiber has less degradation in optical properties or less increment in optical attenuation during bending of the optical fiber cable. Thus, the bend insensitive fiber further helps to maintain the optical properties during multiple winding/unwinding operations of the optical fiber cable. The optical fibers may be coloured fiber and/or single-core optical fiber and/or multi-core optical fiber and/or a single-mode optical fiber and/or a multimode optical fiber or the like. Further, the single mode optical fiber carries only a single mode of light and the multimode optical fiber carries multiple modes of light to propagate. The multicore optical fibers includes multiple cores as opposed to the single-core optical fiber that comprises only a single core.

In accordance with an embodiment of the present disclosure, a core of the optical fiber cable 200, 300, 400 have a uni-tube/monotube design comprised of a single-coil element or a multitube design comprised of multiple coil elements carrying one or more optical transmission elements 202, 302, 402 respectively. one or more optical transmission elements 202, 302, 402 may be surrounded/enclosed by one or more coil elements 100. one or more coil elements 100 also contain at least one of a water-swellable yarn 212, 312, 412 and superabsorbent polymer (SAP) powder (not shown).

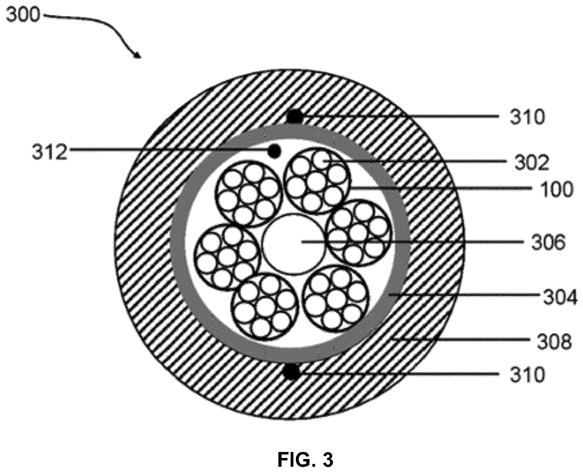

Further, the optical fiber cable 200, 300, 400 may or may not comprise a central strength member. In the presence of the central strength member 306, one or more coil elements 100 may be stranded around the central strength member 306 (as shown in Fig. 3).

In accordance with an embodiment of the present disclosure, the stranding may be helical or SZ. A helical stranding is performed either clockwise or anti-clockwise. In SZ stranding, a number of turns are wound in S direction and then a number of turns in Z direction throughout the length.

In accordance with an embodiment of the present disclosure, the central strength member 306 may be made of, but not limited to, FRP (Fiber Reinforced Plastic), ARP (Aramid Reinforced Plastic) or any other suitable dielectric/strength material. The central strength member 306 may have a round shape, a flat shape or any other suitable shape. Alternatively, the optical fiber cable may comprise one or more strength members 206, 406 embedded in the second layer 208, 408. One or more strength members 206, 406 may be made of, but not limited to, FRP (Fiber Reinforced Plastic), ARP (Aramid Reinforced Plastic) or any other suitable dielectric/strength material. Further, one or more strength members 206, 406 may have a round shape, a flat shape or any other suitable shape. one or more strength members 206, 406 may be coated with EAA (Ethylene Acrylic Acid) or EVA (Ethylene-Vinyl Acetate) coating for better adhesion with the second layer 208, 408, i.e., to enhance the adhesion of one or more strength members 206, 406 with the second layer 208, 408.

In accordance with an embodiment of the present disclosure, one or more coil elements 100 may be encapsulated by the first layer 204, 304, 404. The first layer 204, 304, 404 maybe, but not limited to, water blocking tape, metal tape, dielectric armouring.

In accordance with an embodiment of the present disclosure, the first layer 204, 304, 404 may be encapsulated by the second layer 208, 308, 408. The second layer 208, 308, 408 may be a sheath or jacket formed by, but not limited to, polyvinylchloride, polyethylene (such as High-Density Poly Ethylene (HDPE), Medium Density Poly Ethylene, and Low-Density Poly Ethylene), polyurethane, thermoplastic rubber/elastomer, thermoplastic chlorinated polyethylene or combination thereof. It may be noted that only two layers i.e., the first layer and the second layer have been represented as an example, the optical fiber cable 200, 300, 400 may contain one or more layers depending upon requirement and implementation. Non-limiting examples of one or more layers may be water blocking tape, metal tape, dielectric armouring, yarns etc.

In accordance with an embodiment of the present disclosure, the optical fiber cable 200, 300, 400 also contain one or more ripcords 210, 310, 410. In particular, one or more ripcords 210, 310, 410 are provided in the second layer 208, 308, 408 or in between the first layer 204, 304, 404 and the second layer 208, 308, 408. Moreover, one or more ripcords 210, 310, 410 may facilitate easy stripping of the optical fiber cable 200, 300, 400 and may be made of nylon, polyester, aramid yarns or any other suitable material and may have a flat shape, monochord, cabled structure or any other suitable structure depending upon the requirement of the optical fiber cable.

Advantageously, the optical fiber cable with one or more coil elements is a flexible alternative to conventional buffer or loose tubes to enclose one or more optical transmission elements. Moreover, one or more coil elements have restricted elongation in the longitudinal direction.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (200, 300, 400), **characterized in that**:
one or more optical transmission elements (202, 302, 402) extending in a longitudinal direction; and
one or more coil elements (100);
wherein the one or more coil elements are a series of loops such that each loop (106) from the series of loops is physically connected to adjacent loops.

2. The optical fiber cable (200, 300, 400) as claimed in claim 1, wherein the series of loops of the one or more coil elements (100) surrounds the one or more optical transmission elements (202, 302, 402).

3. The optical fiber cable (200, 300, 400) as claimed in claim 1, wherein the one or more coil elements (100) are flexible in transverse direction

4. The optical fiber cable (200, 300, 400) as claimed in claim 1, wherein the one or more coil elements (100) are substantially non-elongatable in the longitudinal direction.

5. The optical fiber cable (200, 300, 400) as claimed in claim 1, wherein the series of loops has a radial deformation of less than 30% at an axial force of up to 50N.

6. The optical fiber cable (200, 300, 400) as claimed in claim 1, wherein a distance between consecutive loops of the one or more coil elements (100) varies up to d, where d is a gap between two consecutive loops in zero stress position.

7. The optical fiber cable (200, 300, 400) as claimed in claim 1, wherein during bending of the one or more coil elements (100) to a circle of diameter equal to or more than 10D, where D is an outer diameter of the one or more coil elements (100).

8. The optical fiber cable (200, 300, 400) as claimed in claim 1, wherein the one or more coil elements (100) are made of a fiber retaining element (102) such that subsequent loops (106) are made of a single continuous element.

9. The optical fiber cable (200, 300, 400) as claimed in claim 5, wherein the one or more coil elements (100) further comprises a pitch retaining element (104).

10. The optical fiber cable (200, 300, 400) as claimed in claim 9, wherein the pitch retaining element (104) connects the subsequent loops (106) of the fiber retaining element (102) to preserve relative position of the subsequent loops.

11. The optical fiber cable (200, 300, 400) as claimed in claim 1, wherein the one or more coil elements (100) is defined by multiple subsequent loops placed at a predefined distance connected through a pitch retaining element (104) longitudinally.

12. The optical fiber cable (200, 300, 400) as claimed in claim 1, wherein the optical fiber cable (300) further comprises a central strength member (306).

13. The optical fiber cable (200, 300, 400) as claimed in claim 1, wherein the one or more coil elements (100) are stranded around the central strength member (306).

14. The optical fiber cable (200, 300, 400) as claimed in claim 1, wherein a gap between two consecutive loops of the one or more coil elements (100) is less than a width of a loop (106) of the one or more coil elements (100).

15. The optical fiber cable (200, 300, 400) as claimed in claim 1, wherein the optical fiber cable (200, 300, 400) further comprises at least one of a water-swellable yarn (212, 312, 412).
